(19) **Europäisches Patentamt / European Patent Office / Office européen des brevets**

(11) **EP 1 978 449 A2**

(12) **EUROPEAN PATENT APPLICATION**

(43) Date of publication:
08.10.2008 Bulletin 2008/41

(51) Int Cl.:
*G06F 17/15* *(2006.01)*

(21) Application number: **08251186.6**

(22) Date of filing: **28.03.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **Montvelishsky, Michael B.**<br>**Burlingame**<br>**California 94010 (US)** |
| (30) Priority: **06.04.2007 US 910629 P** | (74) Representative: **Beresford, Keith Denis Lewis**<br>**BERESFORD & Co.**<br>**16 High Holborn**<br>**London**<br>**WC1V 6BX (GB)** |
| (71) Applicant: **Technology Properties Limited**<br>**Cupertino, CA 95014 (US)** | |

(54) **Signal processing**

(57)    A process for loading a signal data values and convolution filter coefficient values into a target processor ($c_t$) in a set of processors ($c_{util}$) utilized to calculate a convolution. The coefficient values are mapped [150] to $c_{util}$. An interleave [160] of the data values and of the coefficient values determined for $c_t$. The coefficient values are loaded in $c_t$ and the data values are loaded in $c_t$, thereby preparing $c_t$ to participate in calculating [170] the convolution.

FIG. 1b

**Description**

BACKGROUND OF THE INVENTION

TECHNICAL FIELD

The present invention relates generally to signal processing.

BACKGROUND ART

THE INTEGRAL TRANSFORM

Many existing and emerging systems can be analyzed using modem digital processors that are suitably programmed based upon mathematics that describe the underlying systems. For example, such analysis today is increasingly useful for analyzing linear time-invariant systems, such as electrical circuits, optical devices, mechanical mechanisms, and many other systems.
In mathematics and in many fields that use it extensively, such as most branches of the sciences and engineering today, the term "transform" is used to refer to a class of equation analysis techniques. The concept of the transform traces back to the functional analysis branch of mathematics, which primarily deals with the study of spaces of functions where a particular function has as its argument another function. Transforms thus can be used with an individual equation or with entire sets of equations, wherein the process of transformation is a one-to-one mapping of the original equation or equations represented in one domain into another equation or equations represented in another or a separate domain.
The motivation for performing transformation is often straightforward. There are many equations that are difficult to solve in their original representations, yet which may be more easily solvable in one or more other representations. Thus, a transform may be performed, a solution found, and then an inverse transform performed to map the solution back into the original domain. The general form of an integral transform is defined as:

$$(1) \qquad g(\alpha) = \int_a^b f(t)K(\alpha,t)dt \ ,$$

where $K(\alpha,t)$ is often referred to as the "integral kernel" of the transform.

THE LAPLACE TRANSFORM

The Laplace transform is a subset of the class of transforms defined by equation (1) and it is often particularly useful. Given a simple mathematical or functional description of an input to or an output from a system, the Laplace transform can provide an alternative functional description that may simplify analyzing the behavior of the system. The general form of the Laplace transform is defined as:

$$(2) \qquad \mathcal{L}\{f(t)\} = \int_0^\infty e^{-st} f(t)dt \ ,$$

where the limits of integration and the integral kernel are redefined from equation (1) as $a = 0$, $b$ is replaced by $\infty$, and $K(\alpha,t) = e^{-st}$. The use of a Laplace transform on $f(t)$ is only possible when $s$ is sufficiently large and certain conditions are met, but these conditions are usually flexible enough to allow $f(t)$ to take on the functional form of nearly any useful function that is found in practice.

THE CONVOLUTION THEOREM

It is a common occurrence that a certain function, say, $F(s)$ is not the transform of a single known function but can be represented as the product of two functions that are each the result of the transform of a known function $f(t)$ or $g(t)$, respectively. That is,

$$(3) \quad F(s) = \hat{f}(s)\hat{g}(s) \, ,$$

where g(t) must satisfy the same conditions as f(t). From this link between F(s), f(t), and g(t) the following relationship holds:

$$(4) \quad F(s) = \mathcal{L}\left\{\int_0^t f(t-\tau)g(\tau)d\tau\right\} \, ,$$

which is often referred to as the "convolution theorem."

NUMERICAL APPROXIMATION OF THE CONVOLUTION THEOREM

It can be observed that the convolution theorem results in a transformation of an integral of just one variable. Techniques for numerical approximation of an integral of just one variable therefore can be applied.

The following equality holds between the integral representation and the Riemann sum representation (wherein the latter is especially suitable for use in numerical approximation techniques performed using digital circuitry):

$$(5) \quad \int_0^t f(t-\tau)g(\tau)d\tau = \lim_{k\to 0}\sum_{k=0}^t f(c_{t-k})g(c_k)\Delta\tau \, ,$$

where each $c_{t-k}$ and $c_k$ are chosen arbitrarily in the $k^{th}$ subinterval. In practice the right hand side of the equality in equation (5) is approximated by utilizing a very small $\Delta\tau$ and realizing that there exists an error term of some order dependent on the numerical technique chosen and the value of $\Delta\tau$. Thus:

$$(6) \quad \lim_{k\to 0}\sum_{k=0}^t f(c_{t-k})g(c_k)\Delta\tau = \sum_{k=0}^t f(c_{t-k})g(c_k)\Delta\tau + O\!\left(\Delta\tau^m\right) \, ,$$

where m is the order of accuracy that can be represented by the resultant sum (and also the number of digits of precision that can be expected) and O is big-O in traditional mathematics context.

DIGITAL SIGNAL PROCESSING

As implied in passing above, there are existing and potential uses in important applications for transforms that can benefit from the use of convolution. For instance, digital signal processing (DSP) is widely and increasingly used and just one such important application of it is for digital filtering. Any filtering that can be expressed as a mathematical function can be achieved through the use of a digital filter, and this is one of the very foundations of modem DSP practice. For example, digital filtering on data values sampled from a signal permits removing unwanted parts of the signal or extracting the useful parts of the signal.

The finite impulse response (FIR) and the infinite impulse response (IIR) are the two main types of digital filters used in DSP applications today, with the more common being the FIR filter.

The FIR filter is usually considered advantageous to use because it does not require internal feedback, which can, for example, cause an IIR filter to respond indefinitely to an impulse. The word "finite" in its name also implies another advantage of the FIR filter. The impulse from such a filter ultimately settles to zero, and errors in the iterative summing calculations used do not propagate. That is, the error term stays constant throughout the entire calculation process. This is a distinct advantage over an IIR filter, for example, where error can potentially grow for each additional iterative output sum.

Unfortunately, for many applications a major limitation of a digital filter is that its speed is restricted by the speed of the processor or processors used for numerical calculations. If high filtering speeds are required, for instance, this can make the hardware needed to implement a digital filter expensive or simply unattainable. For virtually all applications, and holding true generally for most electronics-based systems, the higher the speed being employed the harder it also becomes to deal with coincidental effects, such as suppressing electromagnetic noise and dissipating heat.

Generalizing now beyond the case of digital filtering, DSP usually inherently involves sampling at least one signal that is being processed. The sampling rate is defined as the number of samples per unit time of a particular continuous signal which converts the continuous signal into a discrete signal. There are many reasons to turn a continuous signal into a discrete signal, such as for uses involving modulation, coding, and quantization. The sample rate is most commonly referred to by Hertz (Hz) (a frequency unit of measure), which is equivalent to wavelength ($\lambda$) (a unit of time, where $\lambda = Hz^{-1}$ and vice versa).

There are three methods by which a continuous signal can be sampled in an attempt to reconstruct the original function: under sampling, Nyquist rate sampling, and over sampling.

Under sampling of a continuous signal is often not the best choice, since it is not always possible to obtain all of the relevant information from the original signal. However, if reconstruction of the original signal is not important, then under sampling will lead to less data stored and can make the sampling process a lot faster.

Often the preferred sampling method is Nyquist rate sampling, because it can allow for exact reconstruction of a particular signal at a later time. Here the sampling rate (termed the "Nyquist rate") must be greater than twice the bandwidth of the signal being sampled and the signal must be bandlimited, meaning that the signal is a deterministic one having a Fourier transform or power spectral density that is zero above a certain finite frequency.

Over sampling is the most inefficient or wasteful of the three sampling methods, but it always allows for recovery of the original signal and it therefore may be advantageous when speed is not important.

The importance of sampling, and how it often imposes constraints on DSP and on the systems using it are discussed further, presently.

PARALLEL ALGORITHMS

Until recent architectural changes to the hardware associated with computing machines (e.g., ones used for DSP and many other applications), all computer implemented algorithms were regarded as being completed sequentially or serially. That is, only one action could be performed at any given moment in time. This ideology led to the construction of faster and faster machines, so as to complete each sequential task in a lesser and lesser amount of time. As already noted in passing above, however, such processors are presently reaching a limit in realizable processing power. Today this limit is redirecting the focus from increasing hardware speed to increasing algorithm speed.

One approach to increasing algorithm speed is to use parallelization. Many algorithms lend themselves quite well to some degree of parallelization, although they may still be limited by the hardware used to perform them. Still other algorithms can achieve greater speeds if all aspects are completed in parallel. In this regard, Amdahl's Law is often utilized to determine the maximum speedup (S) which would occur in parallel computing when given a percentage of an algorithm that can be accomplished in parallel ($T_p$), the percentage of the algorithm that can be accomplished sequentially ($T_s$), and the number of parallel processors available (N). Amdahl's Law can be expressed as:

$$(7) \quad S = \frac{T_s + T_p}{T_s + \dfrac{T_p}{N}} ,$$

and it is widely accepted and generally felt to support the proposition that it is better to speed up a larger portion of an algorithm than to more greatly speed up a smaller portion of the algorithm. The reasoning for this can be seen in equation (7) and by applying the law of diminishing return.

INTEGER PROGRAMMING

A grasp of the basics of linear programming (LP) is helpful to appreciate integer programming (IP), which is import here for reasons discussed presently. LP problems are optimization problems having objective functions that are linear. Such problems quite often arise, for example, in network flow applications.

LP problems are frequently easily solvable given today's computing resources. A notable exception to this, however, is where an LP has constraints that restrict the values of its variables solely to integer values, that is, where an LP problem is an integer programming (IP) problem. Often the techniques for solving an LP problem cannot be applied in the same manner to an IP problem, and in many cases those techniques cannot be applied at all to the IP problem. IP problems therefore are more difficult to solve, in general.

Additionally, if a problem is handled as an IP problem instead of an LP problem, the computing power required to solve the problem as an IP problem is exponentially greater than the computing power required to solve it as an LP problem. Most researchers therefore believe that an IP problem with more than 40 variables cannot be solved with the computing power available today, at least not unless there is some structure to the IP problem that can be exploited to effectively minimize the number of variables in the problem. For this reason most of the time spent in developing a solution to an IP problem is directed to finding ways to exploit the structure of the problem so that the number of variables is reduced to allow timely computer solutions. Accordingly, however, there is a great tradeoff in classifying an optimization problem as an IP problem over a LP problem. An IP problem may more realistically model the given situation, but its being an IP problem then leads to an unsolvable set of equations. In contrast, LP problems are often less realistic than there IP problem counterparts for modeling the underlying situation, but they can usually be solved and solved quickly.

It therefore follows that improving the systems which we use for processing signals, for example performing numerical convolution calculations, particularly those used for DSP, will allow us to perform these applications and related tasks at higher speeds, more economically, and with reduced detrimental effects in the underlying and peripheral systems.

BRIEF SUMMARY OF THE INVENTION

One aspect of the present invention is a process for loading a plurality of signal data values and a plurality of coefficient values into a target processor ($c_t$) that is one of a set of utilized processors ($c_{util}$) to calculate a convolution. The plurality of coefficient values are mapped to $c_{util}$. Then an interleave of the plurality of data values and a plurality of coefficient values in $c_t$ is determined. The plurality of coefficient values are loaded in $c_t$ and the plurality of data values are loaded in $c_t$, thus preparing $c_t$ to participate in processing the signal data values. In an example, the coefficient values are convolution filter coefficient values and the process calculates the convolution of the filter coefficients and the data values.

Another aspect of the present invention is a system to process a signal , for example calculate a convolution, based on a plurality of signal data values and a plurality of coefficient values which may be convolution filter coefficient values. A set of utilized processors ($c_{util}$) are provided wherein each, in turn, can at a given point be viewed as a target processor ($c_t$). A logic maps the plurality of coefficient values to $c_{util}$. A logic determines an interleave of the plurality of data values and a plurality of coefficient values in $c_t$. A logic loads the plurality of coefficient values in $c_t$. And logic loads the plurality of data values in $c_t$. This prepares $c_t$ to participate in the signal processing, for example calculating a convolution.

The invention also provides a computer program which when run on an array of computers causes the array to implement the process of said one aspect of the invention. The array of computers may be on a single semiconductor die. The program may be on a carrier, for example a recording medium, a signal which may be an electrical signal , or a memory device.

These and other objects and advantages of the present invention will become clear to those skilled in the art in view of the description of the best presently known mode of carrying out the invention and the industrial applicability of the preferred embodiment as described herein and as illustrated in the figures of the drawings.

BRIEF DESCRIPTION OF THE SEVERAL VIEWS OF THE DRAWING(S)

The purposes and advantages of the present invention will be apparent from the following detailed description in conjunction with the appended figures of drawings in which:

FIG. 1a-b are schematic block diagrams stylistically depicting an overview of how a convolution calculation system in accord with the present invention may perform set-up operations, formal work operations, and wrap-up operations.
FIG. 2 (background art) is a diagrammatic view generally depicting the major details of a SEAforth 24A device being used as the target array in FIG. 1a.
FIG. 3 is a flow chart depicting how an exemplary embodiment of the mapping stage of FIG. 1b may be performed.
FIG. 4 is a chart depicting how an exemplary case of how the interleave stage of FIG. 1b may work.
FIG. 5 is a detailed diagrammatic view of a particular convolution calculation node from the target array in FIG. 2 during the calculation stage of FIG. 1b.

And FIG. 6A-B is a two page listing of Forth code to perform a hybrid FIR convolution.
In the various figures of the drawings, like references are used to denote like or similar elements or steps.

DETAILED DESCRIPTION OF THE INVENTION

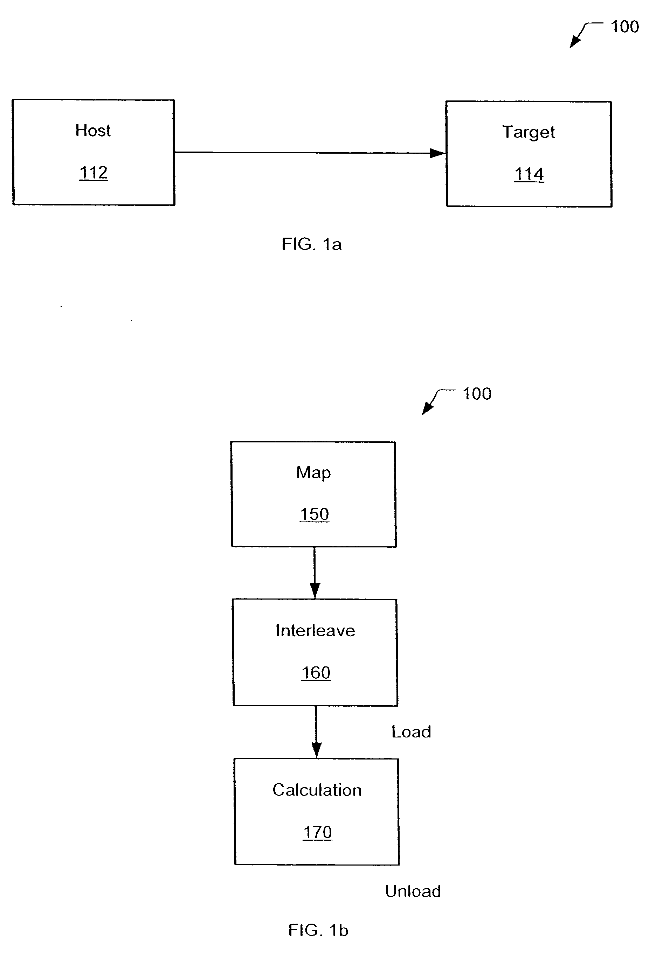

A preferred embodiment of the present invention is a system for convolution calculation performed with multiple computer processors. As illustrated in the various drawings herein, and particularly in the view of FIG. 1a-b, preferred embodiments of the invention are depicted by the general reference character 100.

FIG. la-b are schematic block diagrams stylistically depicting an overview of how a convolution calculation system (CCS 100) in accord with the present invention may perform set-up operations, formal work operations, and wrap-up operations.

As shown in FIG. 1a, a host processor 112 is employed to map signal data values and convolution coefficient filter values to multiple processors, cores, or nodes in a target array 114, to initiate the loading of an interleave based on the signal data values and the coefficient filter values into the target array 114, and to receive results from the target array 114.

The host processor 112 can be a single discrete system, as shown in FIG. 1a. However, once the following is grasped those skilled in the art will also appreciate that the host processor 112 can be multiple discrete systems. Furthermore, as discussed presently, the host processor 112 can even be part of the target array 114. Typically, however, the host processor 112 will be a conventional personal computer (PC) or a workstation.

The target array 114 can also take many forms but particularly can be a multi-core or multi-node, single-die integrated circuit device such as one of the SEAforth (TM) products by Intellasys Corp. of Cupertino, California.

FIG. 1b depicts the major stages of work in the CCS 100. In a mapping stage 150 the convolution digital filter values are mapped to the available processors, cores, or nodes in the target array 114, to more efficiently then utilize them. Then, in an interleave stage 160, an interleave is built to efficiently load the coefficients into the processors, cores, or nodes in the target array 114. And in a calculation stage 170 convolution is performed (a hybrid FIR example is presented below). Of course, loading signal data values and unloading result values also occurs, but these are not shown as stages in FIG. 1b.

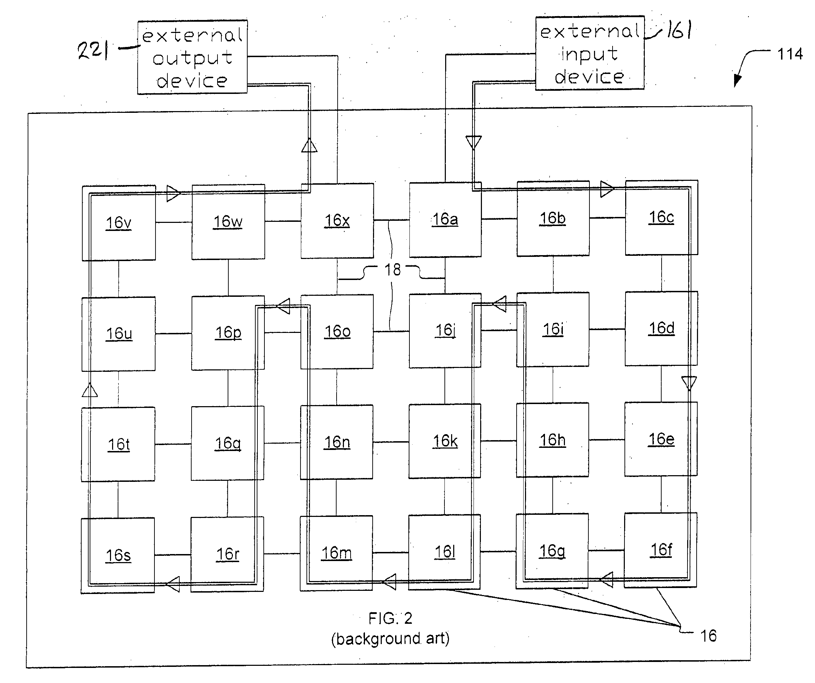

FIG. 2 (background art) is a diagrammatic view generally depicting the major details of a SEAforth 24A device being used as the target array 114. To focus on the aspects here that are relevant to preparation for and actual use later in convolution calculation, many minor and peripheral elements have been omitted or represented generically in FIG. 2. Those skilled in the art will appreciate, however, that such elements will be present in actual operating embodiments and that these typically can be entirely conventional in nature.

The sytem of Figure 2 comprises the array 114, an input device 161 and an output device 221. The input device 161 provides, from a signal to be processed, input data values upon which convolution will be performed. The input data values are samples of the signal to be processed. The output device 221 receives the processed data values from the array 114.

As can be seen in FIG. 2, the SEAforth 24A device has 24 cores (cores 16 collectively and cores 16a-x individually) that intercommunicate via data buses 18. [Herein the term "cores" is now used, but the term "nodes" is equally appropriate when speaking of the processors in devices like the SEAforth 24A and the term "processors" is generically correct.]

Typically, but not necessarily, one core 16 (e.g., core 16a in FIG. 2) is dedicated to handling data input tasks and another core 16 (core 16x in FIG. 2) is dedicated to handling data output tasks. Accordingly, 22 of the 24 cores 16 present here may be used to perform operations that are formally related to convolution calculation. Alternately, one core 16 might be dedicated to handling both data input and output or cores 16 might be dedicated to still other tasks. For instance, the host processor 112 can even be implemented in one or more cores 16.

The inventive CCS 100 relies heavily on inputs prior to execution of the calculation stage 170. due to the nature of convolution and on the nature of what has to be done to perform it efficiently in the target array 114. These inputs, and terminology generally, are described below.

GLOSSARY

Generally, c is a variable representing cores 16 in the target array 114, wherein:

$c_{total}$ = the total number of cores 16 present in the target array 114 (e.g., 24 in the example in FIG. 2);
$c_{avail}$ = the number of cores 16 available to be mapped to perform the convolution calculation (e.g., 22 in the example in FIG. 2);
$c_{util}$ = the number of cores 16 to be utilized for mapping the filter values to (i.e., a value that the mapping stage 150 seeks to determine); and
$c_t$ = a target core 16 chosen from $c_{util}$ for consideration at a given time.

Also, generally, n is a variable representing a quantity of digital convolution filter values, wherein:

$n_{actual}$ = an actual number of filter values mapped to the $c_t$;

$n_{est}$ = an estimated number of filter values to be mapped to each core 16 that is part of $c_{util}$;

$n_{taps}$ = the number of filter values ("taps") actually mapped to a given core 16 (i.e., a set of values, one per $c_{util}$, that the mapping stage 150 seeks to determine); and

$n_{max}$ = the maximum mapping value of the signal data values (or the coefficient filter values) to any particular core 16 (i.e., $n_{max}$ is a member of the set of $n_{taps}$ and it is particularly the member having the greatest value).

And the following are defined:

S is the sample rate;

L is the length of the time window for the Integral Kernel;

t is the time needed to multiply two numbers in the target array 114; and

A is the available words of memory in a core 16 for use to store data values and filter values.

Some simple relationships with respect to c logically follow. For instance, one can easily see that $0 < c_{util} \leq c_{avail} \leq c_{total}$, wherein all of these have integer values. Next, having the case $0 < c_{util} < c_{avail} \leq c_{total}$ may be non-optimal, but this is nonetheless likely to occur in real-world applications. That is, cases will likely be encountered where it is more efficient to have one or even more cores that have no filter values mapped to them, and thus cores that are not even used in the formal process of convolution calculation.

Similarly, some relationships with respect to n also logically follow. For instance, one can see that $0 \neq n_{total}$ and $0 \leq n_{taps} \leq n_{est} \leq n_{total}$ apply, wherein $n_{taps}$ and $n_{total}$ have integer values (and we will restrict $n_{est}$ to also having an integer value). Next, the case where $n_{taps} = n_{total}$ (i.e., all filter values are mapped to a single core) should be acknowledged. The inventive CCS 100 encompasses cases where this is the most efficient solution, although the benefit of the CCS 100 is particularly realized in cases where $n_{taps} < n_{total}$ provides a more optimal solution. And again, effectively restating a point already made, above, one may encounter real-world applications where $0 = n_{taps}$ for some cores.

Some simple relationships with respect the defined values can also be stated. The value of S is herein treated as changeable. That is, more or less samples per unit time can be collected. The value of L is herein not treated as changeable. The value of t is fixed, since it inherently has a minimum value dictated by the hardware of the target array 114 (and we will presume that efficient programming is used and that this minimum is realized). The value of A can be reduced but not increased, since the quantity of words of memory is limited by the available words in RAM, and in ROM if any of it is utilized to store data or filter values. There is no requirement, however, that all of A by employed.

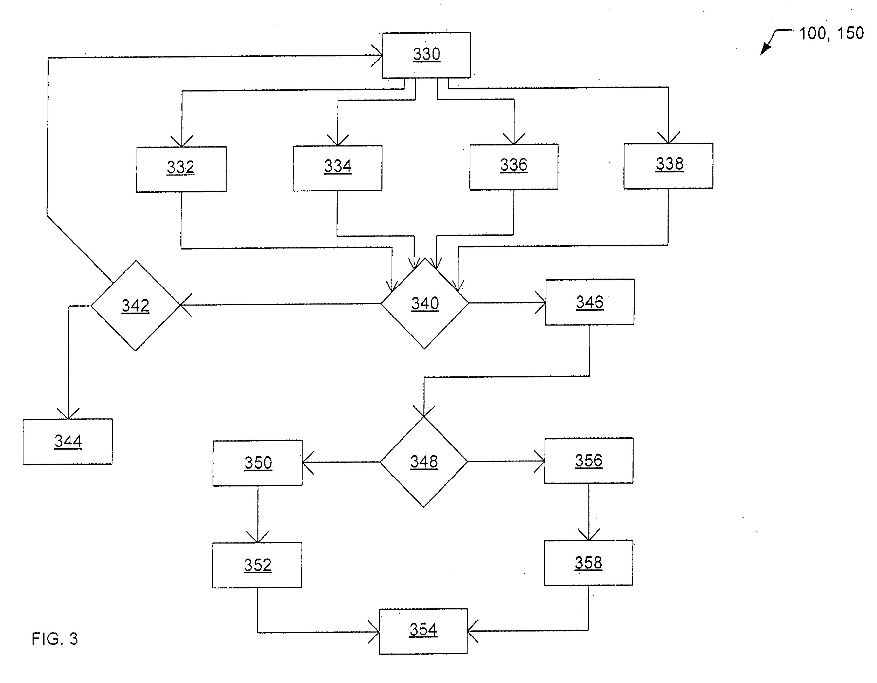

FIG. 3 is a flow chart depicting how an exemplary embodiment of the mapping stage 150 of the inventive CCS 100 may be performed. In a step 330 the mapping stage 150 starts. Next, a set of inputs are provided to the host processor 112. Specifically, in a step 332 the sample rate (S) is provided; in a step 334 the length (L) of a time window for the Integral Kernel is provided (i.e., its duration); in a step 336 the time (t) needed to multiply two numbers in the target array 114 is provided; and in a step 338 the maximum mapping value ($n_{max}$) of the signal data values (or the coefficient filter values) to any particular core 16 is provided.

In a step 340 it is determined whether the inputs in steps 332-336 are valid. If these inputs are invalid in any respect, a step 342 follows in which it is determined whether to abort the mapping stage 150. If the determination is to abort, a step 344 follows in which the mapping stage 150 stops. Alternately, if the determination is to not abort, the mapping stage 150 returns to step 330, as shown.

Continuing now with the other alternative at step 340, if the inputs are deemed collectively valid, a step 346 follows where the number of cores 16 ($c_{util}$) that will be used to perform the parallel convolution algorithm to is calculated.

First, $n_{taps}$ is calculated:

$$(8) \quad n_{taps} = S * t \ ,$$

Next, $n_{max}$ is determined. It can be either a user provided input (step 338) or it can be calculated:

$$(9) \quad n_{max} = \frac{A}{2} \ ,$$

Then, the estimated number of taps per node ($n_{est}$) is calculated:

$$(10) \quad n_{est} = \min\left(n_{taps}, n_{max}\right) ,$$

Next, now that the number of taps per node ($n_{est}$) is known, the number of cores ($c_{util}$) that these taps can be mapped to is calculated:

$$(11) \quad c_{util} = \left\lceil \frac{L}{n_{est}} \right\rceil ,$$

Note, here $c_{util}$ needs to meet the requirement that $c_{util} \leq c_{avail} \leq c_{total}$. If this requirement is not satisfied, the value for L and/or the value for $n_{est}$ can be modified by making the value for L smaller and/or making the value of $n_{est}$ larger. Making a change to L is done by user input. In contrast, making a change to $n_{est}$ can be done programmatically. The value of $n_{est}$ is a function of $n_{taps}$ and $n_{max}$, and both of these can be reduced. In the case of $n_{max}$, this can be done by using less than all of the available number of words (A) in RAM/ROM and in the case of $n_{taps}$ this can be done by decreasing either or both of S and t (while still maintaining a $S \geq t$ relationship).

Continuing with FIG. 3, in a step 348 it is determined whether $c_{util}$ is an integer value. That is, that equation (11) not have produced a remainder.

If there is no remainder, a uniform mapping of the taps to the cores 16 is possible and using it should produce an optimal efficiency. In this case, a step 350 follows where the value of $n_{est}$ is used for all of $c_{util}$. Then a step 352 follows where an interleave vector is mapped to each core 16 in $c_{util}$ (the interleave vector is discussed presently). And in a step 354 the formal convolution calculation can proceed.

Proceeding as just described, via step 352 to step 354, is clearly a rare exception to the general case, which is when the division of L and $n_{est}$ results in a non negative integer result. If there is a remainder in step 348, a non-uniform mapping of the taps to the cores 16 is needed. This is performed in a step 356, where we first attempt to assign the most uniform mapping we can. Due to the nature of the non-uniformity in the mapping at least two different values for $n_{actual}$ will be needed, if not more.

The inventor's preferred initial approach in step 356 is to use the value of $n_{actual}$ in $c_{util}$-1 of the cores 16 and to use a different mapping in the ($c^{th}$) other core 16 in $c_{util}$. The $c^{th}$ core then has the mapping $m_{actual}$ where:

$$(12) \quad m_{actual} = L - n_{est}\left(c_{util} - 1\right) ,$$

And where $m_{actual} < n_{actual}$. Unfortunately, this initial approach can also be inefficient for certain applications using this type of mapping. [Note, the approaches discussed here only offer guidelines, because the nature of integer programming (IP) problems, like this one, limits solutions to integer results and greatly restricts the available solution techniques.]

Due to the fact that the convolution method is limited to the cores 16 in $c_{util}$, since only they will be in use during formal calculation, it is imperative that the mapping to each core 16 in $c_{util}$ be as close to uniform as possible. This close uniformity among these cores 16 then limits the sleep time of those cores 16 with less than the largest number of taps per core 16.

Another way of viewing mapping here is that we want the performance of the slowest part to be increased even though the performance of the faster part will most likely be decreased, per Amdahl's Law. Given the non-uniform mapping required here, it is reasonable to expect the value for $n_{est}$ to take on more than one value during the mapping process. For example, assume L = 99 and $n_{estl}$ = 24, then $c_{util}$ = 5. This case yields a remainder when L and $n_{est}$ are divided. Using the first method discussed above, the mapping here would be 24, 24, 24, 24, and 3. However, using the method just discussed, a more desirable mapping would be 20, 20, 20, 20, and 19. [Of course, there are four other mappings that yield the same overall result as this, e.g., 19, 20, 20, 20, and 20).] It is extremely difficult to outline a general algorithm to optimally map the cores 16 in such cases, so the point here is that it is still possible to retain some efficiency in the mapping even when the division of L and $n_{est}$ results in a non-zero remainder, and this efficiency is maximized when the value of $n_{est}$ for the cores 16 in $c_{util}$ is as close to uniform as possible.

After step 356, a step 358 follows where the interleave vector is mapped to each core 16 in $c_{util}$ (again, the interleave vector is discussed presently), and in a step 354 the formal convolution calculation can proceed.

Summarizing, the mapping stage 150 is now complete and the values for the actual numbers of taps for the respective cores 16 are known and the next stage of the overall CCS 100 can be performed, that is, determining an interleave vector in the interleave stage 160. In FIG. 3, the interleave stage 160 is represented by step 352 or step 358, where an interleave vector is mapped to the cores 16 in $c_{util}$ (i.e., to each core that is used for the formal convolution calculation) and step 354 is the calculation stage 170.

Briefly, in the interleave stage 160 the goal is to set-up to perform convolution in the calculation stage 170 by utilizing an interleave between sampled signal data values (also known as history values) and the convolution digital filter coefficients. Assuming that the signal data values and the convolution digital filter coefficient values are represented as vectors, an interleave between the two results in a vector twice the size of the original convolution digital filter coefficient values. The reason this interleave vector is this size is due to the nature of convolution, where data can be continuously fed that has an unknown or non-determined length. Although the final interleave vector is twice the length of the convolution digital filter coefficient values vector, the final interleave vector is arranged such that row one is empty, followed by the first convolution digital filter coefficient in row two, followed by another empty row, followed by the second convolution digital filter coefficient value in the fourth row. This is repeated until all of the convolution digital filter coefficient values are inserted and an equal number of empty rows are present. These empty spaces then will ultimately be filled with signal data values as interleave is performed prior to any formal convolution calculations taking place.

In step 352 the way the interleave vector is mapped to each core 16 in $c_{util}$ is sequential. The first core 16 utilized will have a mapping of the first $2*n_{actual}$ interleave vector entries and the second core 16 utilized will have a mapping of the next $2*n_{actual}$ interleave vector entries. Similarly, each additional core 16 in $c_{util}$ will have a mapping of the next $2*n_{actual}$ interleave vector entries. Upon mapping the last such core 16, the interleave vector will still be devoid of any data values, however, but each core 16 should now have a uniform mapping in length of values that it will receive. From here the interleave stage 160 is complete, and we are ready for convolution to be performed in the calculation stage 170 in step 354.

Digressing briefly, the function of step 358 is similar to that of step 352, only here the interleave vector mapping is not so straightforward because the amount mapped to each core 16 in $c_{util}$ is not necessarily the same. Starting at its beginning, the interleave vector will receive values totaling twice the number of taps calculated for the first convolution node. Then, continuing from where the mapping for the first core ended, the interleave vector will receive values equaling twice the number of taps calculated for the second convolution node. Etc. After all mappings the interleave vector again should still be empty of any data values. This concludes the steps taken by step 358 and the interleave stage 160 is complete, and we are ready for convolution to be performed in the calculation stage 170 in step 354.

Either pathway from the decision in step 348 results in a certain number of taps for each particular node in the convolution sequence (i.e., for each core 16 in $c_{util}$). At step 354 all of the cores 16 to be utilized in the convolution process are mapped with the appropriate length of values from the interleave vector, but the description of first, second, third, etc. of the cores 16 allocated for convolution is vague with respect to there orientation on the die of the target array 114. The arrangement of what is being called first, second, etc. nodes is restricted so that the first node in the convolution sequence has access to an external input device (FIG. 2) without the use of another node and must have direct access to the second convolution node and therefore the first convolution node must be located on the perimeter of the chip. Direct access implies but is not limited to the case where two nodes can communicate without the use of a third node or, said in another way, the two nodes having direct access share the same data bus 18. The $c^{th}$ node in the convolution sequence must have access to an external output device without the use of another node as well as having direct access to the $c^{th}$-1 node. The second node up to the $c^{th}$-1 node share the same property that each node must have direct access to the previous node and next node in the convolution sequence. One skilled in the art will realize that for certain values of c there are many possible configurations for the arrangement of the first, second, etc. up to the $c^{th}$ core that offer equally valid arrangements on the target array 114. From here the mapping stage 150 and the interleave stage 160 are and convolution is ready to be performed in the calculation stage 170.

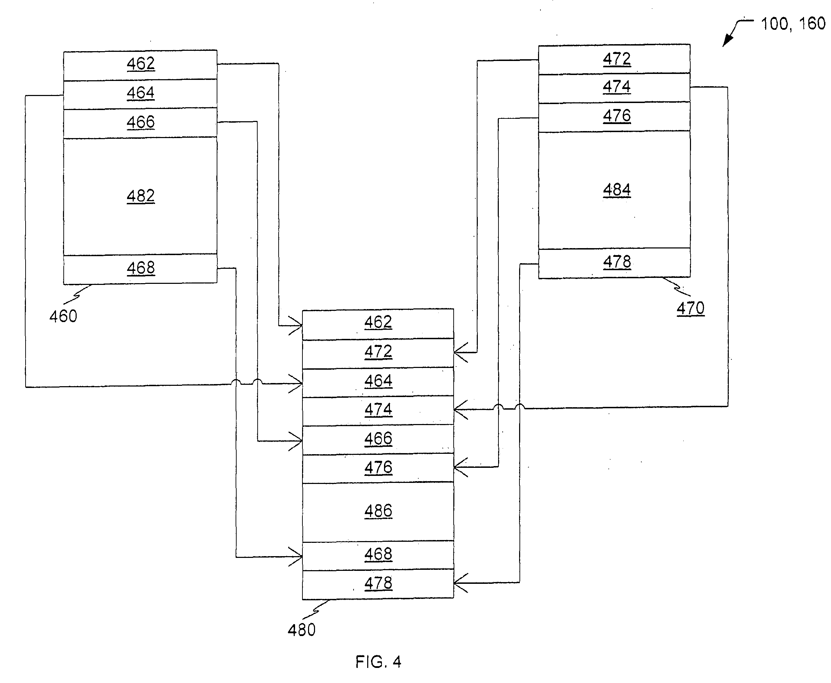

FIG. 4 is a chart depicting how an exemplary case of how the interleave stage 160 of the inventive CCS 100 may work. Here a signal vector 460, for signal data values, and a coefficients vector 470, for convolution digital filter coefficient values, are interleaved to create an interleave vector 480. Only the length of the coefficients vector 470 is known (from step 334 of FIG. 3), but the length of the signal vector 460 is matched to this, even though the signal data may not actually have a fixed length. The elements 462, 464, 466, and 468 of the signal vector 460 correspond to the first, second, third, and last signal data values. The area located between elements 466 and 468, element 482, leaves room for more signal data values than the literal four values provided in FIG. 4. Similarly, elements 472, 474, 476, and 478 of the coefficients vector 470 correspond to the first, second, third, and last convolution digital filter coefficient values, and the area located between elements 476 and 478, element 484, leaves room for more convolution digital filter coefficient values than the literal four values provided in FIG. 4. Interleave is performed so that the resulting interleave vector 480 first receives the top element 462 from the signal vector 460, then the top element 472 from the coefficients vector 470, and continues to receive signal data values and filter coefficient values in this manner until the last coefficient value 478 has been moved to the interleave vector 480. Of course, this interleave at element 486 should also include any values found in elements 482 and 484.

At present the cores 16 that will be used for convolution and whether or not the mapping to these cores 16 is uniform or non-uniform are known. Additionally, determining an interleave of the total number of taps and empty data values has been performed. In the following the mapping of this interleave to the cores is explained for both the case when the mapping is uniform and non-uniform. Referenced in the following two sections are the first, second,...$c^{th}$-1, and $c^{th}$ node, but this referencing is not indicative of the arrangement of the cores 16. Rather, the arrangement of what is being called first, second, etc. cores 16 is restricted so that the first node in the convolution sequence has access to an external input device and must have direct access to the second convolution node. In the case of a device like the SEAforth 24A, this means that the first convolution node is located on the perimeter of the chip. The $c^{th}$ node in the convolution sequence must have access to an external input device as well as having direct access to the $c^{th}$-1 node and therefore like the first convolution node must be located on the device perimeter. Direct access here implies that two nodes can communicate without the use of a third node. The second node up to the $c^{th}$-1 node share the same property that each must have direct access to the previous and the next in the convolution sequence.

Uniform mapping of interleave to the cores 16 is the more simple of the two interleave cases. In this case the first convolution node will contain the first $2*n_{actual}$ elements of the interleave vector, the second convolution node will contain the next $2*n_{actual}$ elements of the interleave vector, etc. Upon completion of the interleave procedure all cores 16 should contain the exact same length of mapping and the interleave vector should be empty.

There are two sub-cases discussed here for non-uniform mapping. The first sub-case is mapping when the values for $n_{actual}$, $m_{actual,}$ and $c_{util}$, are well defined. The first convolution node here will contain the first $2*n_{actual}$ elements of the interleave vector. The second convolution node will contain the next $2*n_{actual}$ elements of the interleave vector. Etc. this mapping of the interleave vector continues in the same way for the first $c^{th}$-1 nodes, where each additional node receives the next $2*n_{actual}$ elements of the interleave vector. The $c^{th}$ node will receive the mapping $2*m_{actual}$, which should be exactly equal to the rest of the interleave vector. Again upon the completion of all mappings the interleave vector should be empty.

The second sub-case is mapping where only the general mapping guidelines have been given. Recall, this is the case where as close to uniform mapping is desired and in most cases there are at least two different values for $n_{actual}$ for the cores 16 in $c_{util}$ being mapped. Even after the values for $n_{actual}$ are well defined, however, there are still many mappings that yield the same overall mapping. Explicit interleave mapping is therefore not possible; again only guidelines can be followed. Beginning with the first convolution node, this node will receive twice the actual number of taps for this particular node from the interleave vector. The second convolution node will receive twice the actual number of taps for this particular node from the interleave vector taken from where the first node's mapping from the interleave vector ended. In a similar way each addition core 16 in $c_{util}$ will grab from the interleave vector at the location where the previous ended and the mapping will be twice the actual number of taps for this particular node.

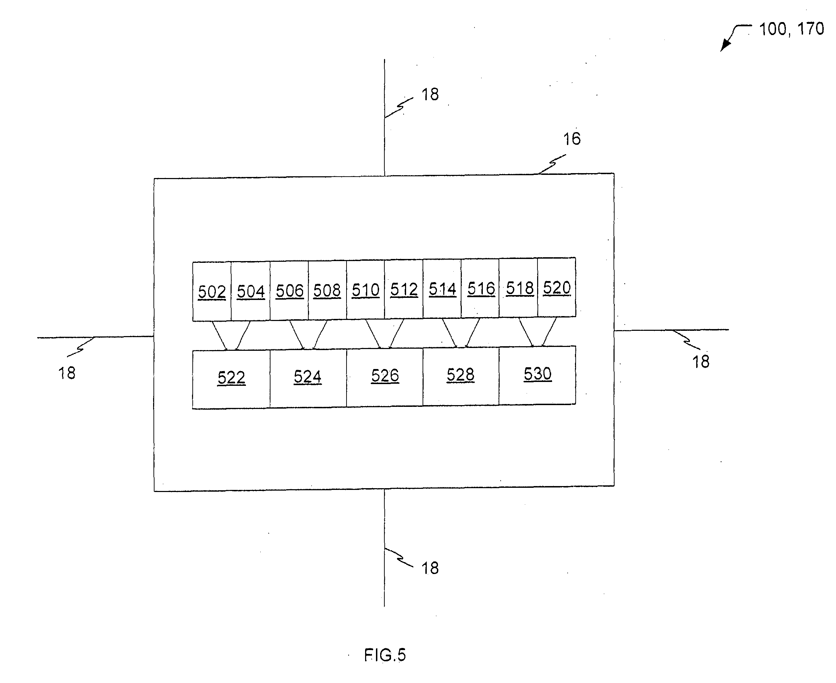

FIG. 5 is a detailed diagrammatic view of a particular convolution calculation node (core 16 in $c_{util}$) from the target array 114 in FIG. 2 during the calculation stage 170 of the inventive CCS 100. The elements 502-520 here represent memory areas that store the interleave entries that are taken from the interleave vector 472 of FIG. 4. This mapping of five signal data values and five convolution digital filter coefficient values to the core 16 in FIG. 5 is merely one example of a mapping that could occur, and larger or smaller mappings to this particular core 16 could also be used.

In the core 16 in FIG. 5, elements 502, 506, 510, 514, and 518 each correspond to signal data values that will pass through the core 16 and elements 504, 508, 512, 516, and 520 each correspond to convolution digital filter coefficient values which are fixed in the sense that these do not move during the convolution process.

During one pass of convolution through the core 16 in FIG. 5, a resultant sum is produced. First the product of elements 502 and 504 is passed into element 522. Next, the product of elements 506 and 508 is passed into element 524, where element 524 combines this product with the value held in element 522. Similarly, the product of elements 510 and 512 is passed into element 526, which combines this product with the value held in element 524. And in like manner, values are arrived at for elements 528 and 530. The value held by element 530 and the value held by element 518 are the only two values that are passed from this core 16 to another core 16. This process of multiplying signal data values and filter coefficient values and adding the product to a previous product partial product sum if one exists, is repeated for all signal data and filter coefficient pairs that exist within a particular core 16 being used for convolution.

A HYBRID FIR CONVOLUTION EXAMPLE

The following describes a method of convolution performed in a suitable target array 114 where all of the cores 16 in $c_{util}$ are mapped with the appropriate number of taps and arranged in such a way that the necessary communication between successive cores 16 can occur. The word "bin" here means a location for either a signal data value or a convolution digital filter coefficient value in one of the cores 16.

    1. Initialization.

        1a. The 'n' number of data sample bins receive the numerical value of '0'.

2. Calculate the first partial sum $p_0$.

2a. Prior to the calculation of the first partial sum $p_0$, the first data sample do is placed into data sample bin $b_0$ in the manner of "pushing" all existing data samples into the next available data bin.

2a1. First, the data sample found in the last data sample bin $b_n$ is pushed out of the last data sample bin and is essentially thrown away.

2a2. Next, the value found in data sample bin $b_{n-1}$ is pushed into data sample bin bn.

2a3. In a similar manner, the value found in data sample $b_{n-2}$ is pushed into data sample bin $b_{n-1}$.

2a4. This process of pushing data into the next available data sample bin is completed until data sample bin $b_0$ does not contain any data. [A data sample bin containing no data is not the same as a data sample bin containing the value '0'.]

2a5. At this point, the first data sample do is pushed into data sample bin $b_0$ with no additional changes to the rest of the data bins.

2b. Next, a product is calculated using as multiplicands the values found in filter coefficient bin $c_0$ and data sample bin $b_0$ which will be known as product $a_0$.

2c. This resultant product will be added to the second product which is defined as the multiplication of multiplicands defined as the values found in filter coefficient bin $c_1$ and data sample bin $b_1$ which results in the second product $a_1$.

2d. This process of adding the previous product to the new product is repeated until product $a_{n-1}$ is added to the last product and will be denoted $a_n$.

2e. The value $a_n$ will be considered equivalent to the first sum $p_0$ of the convolution.

3. Calculate the second partial sum $p_1$.

3a. Place the second data sample value $d_1$ into the first data sample bin $b_0$ through the process of repeating steps 2a1-2a4.

3b. Compute the second partial sum $p_1$ by repeating steps 2b-2d.

4. Calculate the rest of the partial sums. [This algorithm describes a convolution algorithm that receives data for an indefinite amount of time and therefore does not require a stopping condition.]

4a. Repeat the steps of "pushing" the next data sample into the first data sample bin $b_0$ through the process of repeating steps 2a1-2a4.

4b. Compute the new partial sums by repeating steps 2b-2d.

The transfer of data between nodes is not described above, only performing convolution, and then only using a direct representation of the filter. If the filter is instead represented by its derivative representation, the following changes are necessary to perform convolution:

Existing steps:

3b. Compute the second partial sum p1 by repeating steps 2b-2d.

4b. Compute the new partial sums by repeating steps 2b-2d.

Are replaced with:

3b. Compute the second partial sum $s_1$ by repeating steps 2b-2d and adding this value $p_1$ from steps 2b-2d to the previously computed partial sum $p_0$.

4b. Compute the new partial sums by repeating steps 2b-2d and adding this value from steps 2b-2d to the previously computed partial sum.

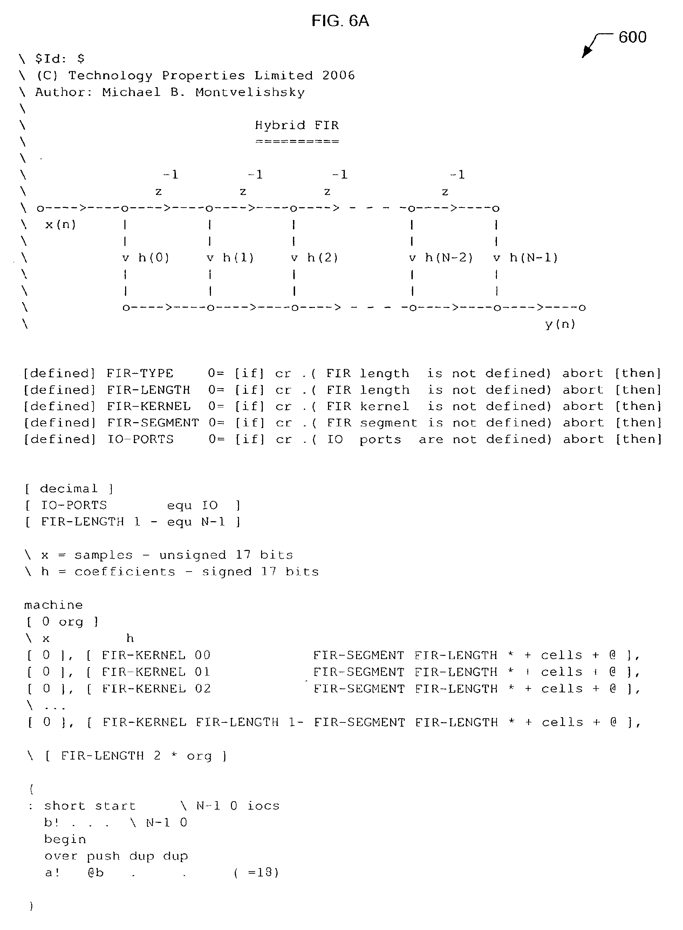

FIG. 6A-B is a two page listing of Forth code 600 to perform a hybrid FIR convolution, substantially in the manner just described.

In summary, the present invention particularly employs two principles. The first of these is that it is better to speed up a larger portion of an algorithm than to greatly speed up a smaller portion. And the second of these is to acknowledge and embrace that a convolution algorithm can have both sequential and parallel elements. A convolution can be computed in a sequential manner, where all pieces are computed one after another. Alternately, at the other extreme, all pieces can be compute at the same time, i.e., in parallel. Or a middle approach can be used, where some parts are computed sequentially and some are computed in parallel. The CCS 100 provides an ability to perform parallel calculations while still maintaining a certain amount of sequential processing, and this can greatly improve the speed of convolution without actually speeding up the convolution algorithm being used or increasing the processing power of the hardware being used.

An embodiment of the invention provides a computer program which when run on the system of Figure 2 maps the signal data values and the convolution coefficient values into the array 114 as described above.

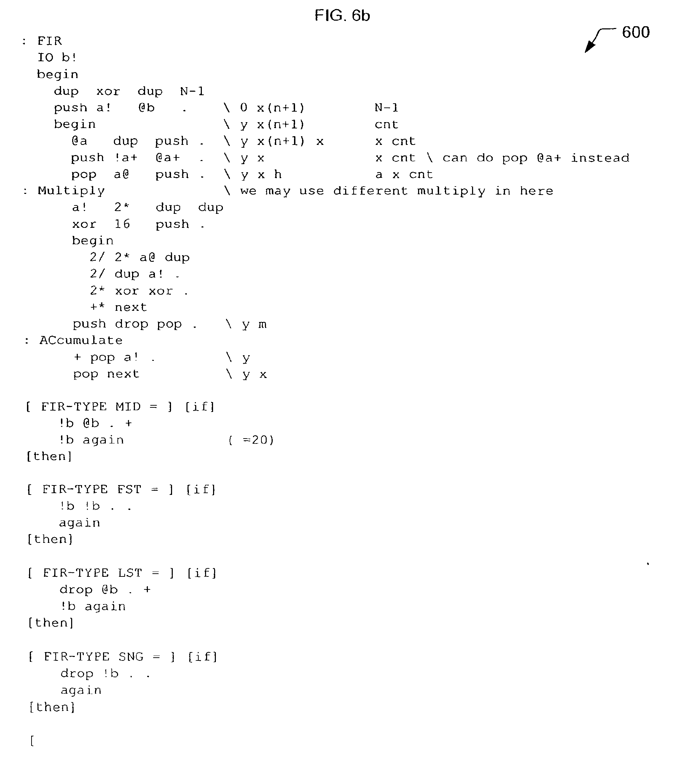

An embodiment of the invention provides a computer program which when run on the system of Figure 2 convolves the signal data values and the convolution coefficient values as described above with respect to Figures 6A and 6B.

Furthermore, convolution is merely an example of this invention and it should now also be appreciated that the CCS 100 also provides a realistic approach to increasing the performance for any type of algorithm that has both sequential and parallel elements to it.

While various embodiments have been described above, it should be understood that they have been presented by way of example only, and that the breadth and scope of the invention should not be limited by any of the above described exemplary embodiments.

**Claims**

1. A process for loading a plurality of signal data values and a plurality of convolution filter coefficient values into a target processor ($c_t$) that is one of a set of utilized processors ($c_{util}$) to calculate a convolution, the process comprising:

   mapping the plurality of coefficient values to $c_{util}$;
   determining an interleave of the plurality of data values and a plurality of coefficient values in $c_t$;
   loading the plurality of coefficient values in $c_t$; and
   loading the plurality of data values in $c_t$, thereby preparing $c_t$ to participate in calculating the convolution.

2. The process of claim 1, where $n_{actual}$ is an actual number of filter values mapped to the $c_t$ and $n_{est}$ is an estimated number of filter values mapped to each of $c_{util}$, said mapping includes selecting said $n_{est}$ that provides most uniform mapping across all $c_{util}$ to be $n_{actual}$.

3. The process of claim 2, where $n_{taps}$ is a number of filter taps mapped to the $c_t$, $n_{max}$ is a maximum number of coefficient values mapped to the $c_t$, S represents a sample rate of the plurality of signal data values, t represents a time to multiply two numbers in the $c_t$, A represents available memory to store the sample and coefficient values in the $c_t$, and L represents an integral kernel time window for the convolution, the process further comprising:

   determining $n_{taps} = S*t$;
   determining $n_{max} = A/2$;
   determining $n_{est} = \min(n_{taps}, n_{max})$; and
   determining $c_{util} = L/n_{est.}$

4. The process of claim 3, further comprising:

   if $c_{util}$ is determined to be a non-integer value, alternating $n_{est}$ to find which provides said most uniform mapping.

5. The process of any preceding claim, wherein:

   said determining includes, building an interleave vector including $2*n_{actual}$ elements for the $c_t$.

6. The process of any preceding claim, wherein:

   said determining includes building an interleave vector including $2*n_{actual}$ elements, respectively for each of the $c_{util}$.

7. The process of any preceding claim, wherein the convolution is part of a filtering operation on the data values in the course of digital signal processing.

8.  A system to calculate a convolution based on a plurality of signal data values and a plurality of convolution filter coefficient values, comprising:

    a set of utilized processors ($c_{util}$) wherein each, in turn, can at a given point be viewed as a target processor ($c_t$);
    a logic to map the plurality of coefficient values to $c_{util}$;
    a logic to determine an interleave of the plurality of data values and a plurality of coefficient values in $c_t$;
    a logic to load the plurality of coefficient values in $c_t$; and
    a logic to load the plurality of data values in $c_t$, thereby preparing $c_t$ to participate in calculating the convolution.

9.  The system of claim 8, where $n_{actual}$ is an actual number of filter values mapped to a present said $c_t$ and $n_{est}$ is an estimated number of filter values mapped to each of $c_{util}$ said logic to map further to select said $n_{est}$ that provides most uniform mapping across all $c_{util}$ to be $n_{actual}$ for said present said $c_t$.

10. The system of claim 9, where $n_{taps}$ is a number of filter taps mapped to said $c_t$, $n_{max}$ is a maximum number of coefficient values mapped to said $c_t$, S represents a sample rate of the plurality of signal data values, t represents a time to multiply two numbers in said $c_t$, A represents available memory to store the sample and coefficient values in said $c_t$, and L represents an integral kernel time window for the convolution, wherein said logic to map is further to:

    determine $n_{taps} = S*t$;
    determine $n_{max} = A/2$;
    determine $n_{est} = min(n_{taps}, n_{max})$ and
    determine $c_{util} = L/n_{est}$.

11. The system of claim 10, wherein said logic to map is further to:

    if $c_{util}$ is a non-integer value, alternate $n_{est}$ to find which provides said most uniform mapping.

12. The system of claim 8, 9, 10 or 11, wherein said logic to determine is further to build an interleave vector including $2*n_{actual}$ elements for said $c_t$.

13. The system of claim 8, 9, 10, 11 or 12, wherein:

    wherein said logic to determine is further to build a interleave vector including $2*n_{actual}$ elements, respectively, for each of $c_{util}$.

14. The system of claim 8, 9, 10, 11, 12 or 13, wherein:

    said $c_{util}$ are all cores in a single die or module.

15. The system of claim 14, wherein:

    said $c_{util}$ are a subset of a larger plurality of computerized processors ($c_{total}$) in a single die or module.

16. The system of any one of claims 8 to 15, further comprising a host system separate from said $c_{util}$ that calculates the convolution, and wherein at least said logic to map and said logic to determine are in said host system.

17. The system of any one of claims 8 to 16, wherein the convolution is part of a filter operation on the data values in a digital signal processor.

18. A method of processing a signal comprising deriving, from the signal, data values representing the signal and processing the data values in accordance with the process of any one of claims 1 to 6.

19. A signal processor comprising means for deriving, from a signal, data values representing the signal and a system for processing the data values in accordance with any one of claims 8 to 17.

20. A computer program which, when run on an array of computers, cuases the array to implement the process of any one of claims 1 to 7 and 18.

21. A carrier carrying the program of claim 20.

22. A carrier according to claim 21 which is a signal, a recording medium or a memory device.

100

Host

112

Target

114

FIG. 1a

100

Map

150

Interleave

160

Load

Calculation

170

Unload

FIG. 1b

FIG. 2
(background art)

external output device 221

external input device 161

114

16

EP 1 978 449 A2

100, 150

FIG. 3

FIG. 4

EP 1 978 449 A2

FIG.5

## FIG. 6A

600

```
\ $Id: $
\ (C) Technology Properties Limited 2006
\ Author: Michael B. Montvelishsky
\
\                            Hybrid FIR
\                            ==========
\  .
\                 -1          -1          -1                 -1
\                z           z           z                 z
\ o---->----o---->----o---->----o----> - - - -o---->----o
\  x(n)      |           |           |               |           |
\            |           |           |               |           |
\            v h(0)      v h(1)      v h(2)          v h(N-2)  v h(N-1)
\            |           |           |               |           |
\            |           |           |               |           |
\            o---->----o---->----o----> - - - -o---->----o---->----o
\                                                              y(n)


[defined] FIR-TYPE    0= [if] cr .( FIR length  is not defined) abort [then]
[defined] FIR-LENGTH  0= [if] cr .( FIR length  is not defined) abort [then]
[defined] FIR-KERNEL  0= [if] cr .( FIR kernel  is not defined) abort [then]
[defined] FIR-SEGMENT 0= [if] cr .( FIR segment is not defined) abort [then]
[defined] IO-PORTS    0= [if] cr .( IO  ports  are not defined) abort [then]


[ decimal ]
[ IO-PORTS        equ IO  ]
[ FIR-LENGTH 1 - equ N-1 ]

\ x = samples - unsigned 17 bits
\ h = coefficients - signed 17 bits

machine
[ 0 org ]
\ x              h
[ 0 ], [ FIR-KERNEL 00           FIR-SEGMENT FIR-LENGTH * + cells + @ ],
[ 0 ], [ FIR-KERNEL 01           FIR-SEGMENT FIR-LENGTH * + cells + @ ],
[ 0 ], [ FIR-KERNEL 02           FIR-SEGMENT FIR-LENGTH * + cells + @ ],
\ ...
[ 0 ], [ FIR-KERNEL FIR-LENGTH 1- FIR-SEGMENT FIR-LENGTH * + cells + @ ],

\ [ FIR-LENGTH 2 * org ]

(
: short start      \ N-1 0 iocs
  b! . . .  \ N-1 0
  begin
  over push dup dup
  a!   @b    .      .        ( =18)

)
```

FIG. 6b

600

```
: FIR
  IO b!
  begin
    dup  xor  dup  N-1
    push a!   @b    .    \ 0 x(n+1)        N-1
    begin                \ y x(n+1)        cnt
      @a   dup  push .   \ y x(n+1) x      x cnt
      push !a+  @a+   .  \ y x            x cnt \ can do pop @a+ instead
      pop  a@   push .   \ y x h          a x cnt
: Multiply               \ we may use different multiply in here
      a!   2*   dup  dup
      xor  16   push .
      begin
        2/ 2* a@ dup
        2/ dup a!  .
        2* xor xor  .
        +* next
      push drop pop .    \ y m
: ACcumulate
        + pop a!  .      \ y
        pop next         \ y x

[ FIR-TYPE MID = ] [if]
    !b @b . +
    !b again            ( =20)
[then]

[ FIR-TYPE FST = ] [if]
    !b !b . .
    again
[then]

[ FIR-TYPE LST = ] [if]
    drop @b . +
    !b again
[then]

[ FIR-TYPE SNG = ] [if]
    drop !b . .
    again
[then]

[
```